# EUROPÄISCHE PATENTSCHRIFT

(11) **EP 3 160 382 B1**
(45) Veröffentlichungstag und Bekanntmachung des Hinweises auf die Patenterteilung: **02.12.2020**
(21) Anmeldenummer: 15731607.6
(22) Anmeldetag: 26.06.2015
(51) Int. Cl.: A61C 13/08, A61C 13/087, A61C 13/09

(54) **MIT FOLIE MODIFIZIERTE DENTALE PROTHESEN MIT VERBESSERTEN EIGENSCHAFTEN**
DENTAL PROSTHESIS MODIFIED WITH FILM AND HAVING IMPROVED PROPERTIES
PROTHÈSES DENTAIRES MODIFIÉES PAR UN FILM ET AYANT DES PROPRIÉTÉS AMÉLIORÉES

(30) Priorität: 27.06.2014 DE 102014109098
(43) Veröffentlichungstag der Anmeldung: 03.05.2017
(73) Patentinhaber: Kulzer GmbH, 63450 Hanau (DE)
(72) Erfinder: RENZ, Karl-Heinz, 63755 Alzenau (DE); STANGE, Frank-Uwe, 88085 Langenargen (DE); NIESE, Marlene, 88079 Kressbronn (DE)
(74) Vertreter: Bendele, Tanja
(86) Internationale Anmeldenummer: PCT/EP2015/064610
(87) Internationale Veröffentlichungsnummer: WO 2015/197859

(56) Entgegenhaltungen:
- DE-A1- 2 910 077
- DE-A1- 19 502 845
- DE-B3- 10 308 609
- DE-C1- 740 759
- US-A- 4 172 323
- US-B1- 6 299 449

## Beschreibung

Die Erfindung betrifft eine dentale Prothese, insbesondere vorkonfektionierte Zähne, wobei in die dentale Prothese eine Schicht einer Folie integriert ist. Die dentale Prothese ist vorzugsweise schichtweise aufgebaut, wobei die Prothese einen inneren Zahnbereich, eine Folie auf dem inneren Zahnbereich und einen weiteren Zahnbereich außen auf der Folie, wie eine Verblendung bzw. Schneideschale, aufweist. Gegenstand der Erfindung ist auch das Verfahren zur Herstellung der dentalen Prothesen.

Bislang werden vorkonfektionierte Zähne in verschiedenen Materialausführungen angeboten. In der Regel basieren die vorkonfektionierten Zähne auf Polymeren von Acrylaten oder Methacrylaten, die mit oder ohne Füllstoffe hergestellt sein können.

Diese Zähne weisen gegenüber mechanischen Alltagsbelastungen eine gute Festigkeit auf. In den letzten 10 Jahren wurden die vorkonfektionierten Zähne jedoch vermehrt nicht nur in Hybridprothesen oder Teleskopprothesen als herausnehmbarer Zahnersatz und Totalprothesen, sondern auch zur Herstellung von Implantat getragenem Zahnersatz eingesetzt. Die mechanischen Belastungen bei Implantat getragenem Zahnersatz sind höher. Zudem kann es vermehrt zu Fehlbelastungen kommen. Infolge dessen kommt es gelegentlich zu Brüchen, insbesondere im Frontzahnbereich. Diese Brüche entlasten die anderen Komponenten des Zahnersatzes, wie beispielsweise die Implantate selbst, und stellen als solches noch kein wesentliches Problem dar. Problematisch ist jedoch das Herausbrechen oder Absplittern von Teilen des Zahnersatzes.

Eine festsitzende dentale Prothese mit integrierter metallischer oder nichtmetallischer Folie ist aus US 6 299 449 B1 bekannt.

Es bestand daher die Aufgabe, dentale Prothesen bereitzustellen, die ein Absplittern von Teilen der Prothese nach Bildung eines Bruches zumindest für einen bestimmten Zeitraum verhindern können. Insbesondere sollen Zähne, wie vorkonfektionierte Zähne bereitgestellt werden, die kein Absplittern von Teilen des Zahns nach Bildung eines Bruches zeigen. Ebenso sollte ein Verfahren zur Herstellung dieser dentalen Prothesen bereitgestellt werden.

Gelöst wird die Aufgabe mit einer dentalen Prothese nach Anspruch 1 sowie einem Verfahren nach Anspruch 8.

Gegenstand der Erfindung ist eine dentale Prothese in die mindestens eine Schicht einer Folie integriert ist. Ebenso Gegenstand der Erfindung ist eine Prothese, insbesondere ein Zahn, eine Verblendschale, Brücke oder Krone, die bukkal oder labial eine integrierte Folie aufweist. Weiter bevorzugt weist der Zahn alternativ oder zusätzlich okklusal und/oder approxinal eine integrierte Folie auf. Gleichfalls bevorzugt sind dentale Prothesen, insbesondere in Form von Zähnen, die die Folienschicht integriert aufweisen, wobei die Folienschicht vorzugsweise angeordnet ist: a) bukkal, b) bukkal und mesial und/oder okklusal, c) okklusal, d) okklusal bukkal, e) inzisal, f) inzisal und bukkal, g) bukkal, okklusal und approximal, h) inzisal und approximal. Vorzugsweise ist die Folie mit einer weiteren Zahnschicht, wie einer äußeren Zahnschicht, versehen. Die äußere Zahnschicht kann eine Verblendung analog einer Dentinschicht sein.

Unter einer erfindungsgemäßen Prothese wird eine prothetische Versorgung verstanden, die ein prothetischer dentaler Formkörper sein kann. Die prothetische Versorgung kann ein Teil eines festsitzenden Zahnersatzes oder auch ein Teil eines herausnehmbaren Zahnersatzes wie einer Hybridprothese sein.

Durch die Verwendung einer zwischen den Schichten der dentalen Prothese, wie eines Zahns, integrierten zähelastischen und/oder thermoplastischen Folie kann nach Bildung eines Bruches das Ablösen von Teilen der Prothese vermieden werden.

Zudem weisen künstliche Zähne und vorkonfektionierte Verblendschalen aufgrund einer begrenzten Dicke eine gewisse Resttransparenz auf. Diese Transparenz kann bei abzudeckenden Hintergründen, wie metallischen Gerüsten, Probleme bereiten. Durch Verwendung der erfindungsgemäßen Folie können diese Probleme vermieden werden, indem eingefärbte, opake, milchige oder trübe Folien in die dentalen Prothesen integriert werden. Eine weitere Variation der gewünschten Farbe ist durch die Positionierung der Folie in der Prothese möglich. So kann die Folie direkt unterhalb der Verblendung, wie einer äußeren weiteren Zahnschicht, vorgesehen sein oder in der Verblendung selbst oder zwischen zwei weiteren Zahnschichten integriert sein.

Gegenstand der Erfindung ist somit eine dentale Prothese umfassend eine integrierte Folie, wobei die Folie unter und/oder auf einer weiteren Zahnschicht integriert ist. Nach einer Alternative ist die Folie somit unter und/oder innerhalb der Verblendung integriert. Erfindungsgemäß steht eine Folie nur mit inneren Oberflächen der Prothese in Kontakt.

Unter einer integrierten Folie wird eine in der Prothese eingebettete Folie verstanden. Insbesondere ist die Folie zumindest teilweise zwischen zwei Zahnschichten oder einem Zahnbereich und einer Zahnschicht angebracht. Vorzugsweise ist die Folie zumindest teilweise zwischen dem inneren Zahnbereich und der weiteren Zahnschicht angebracht. Hier ist die weitere Zahnschicht ggf. die äußere Zahnschicht bzw. Schneideschale. Die Folie ist in dieser Alternative unter einer Verblendung auf dem Zahnkern (innerer Zahnbereich) angebracht.

Ebenso kann die Folie zwischen einer zweiten weiteren Zahnschicht und einer äußeren Zahnschicht angebracht sein. In diesem Fall ist die Folie innerhalb der Verblendung vorgesehen.

Gemäß einer weiteren Alternative kann eine dentale Prothese ein, zwei oder mehrere Folien umfassen, insbesondere zwischen dem inneren Zahnbereich und einer weiteren Zahnschicht und zwischen einer zweiten weiteren Zahnschicht und einer äußeren Zahnschicht, wie in einer Verblendung. Ebenso kann die dentale Prothese zusätzlich eine nicht integrierte Folie als Teil der äußeren Oberfläche der Prothese aufweisen.

Gegenstand der Erfindung ist ebenfalls eine dentale Prothese die mindestens ein Teil eines Zahnersatzes ist, insbesondere ein einzelner Zahn, vorzugsweise ein vorkonfektionierter Zahn, oder eine Brücke, insbesondere eine mehrgliedrige Brücke. Eine mehrgliedrige Brücke kann ein, zwei, drei oder vier Zähne umfassen. Ebenso kann die Prothese eine Krone umfassen, vorzugsweise liegt der innere Zahnbereich in Form einer Kappe vor, auf dem die Folie angeordnet sein kann. Auf der Folie kann eine Verblendschale als weitere Zahnschicht aufgebracht sein. Sofern die Prothese als Verblendung vorliegt, kann die Folie zwischen dem inneren Zahnbereich in Form einer Schale und einer weiteren Zahnschicht als äußere Schneideschale vorliegen.

Ferner ist Gegenstand der Erfindung eine Prothese die schichtweise aufgebaut ist und mindestens ein Teil einer innenliegenden Schicht eine Folie umfasst. Vorzugsweise ist die dentale Prothese schichtweise wie folgt aufgebaut (i) der innere Zahnbereich umfasst PMMA und/oder PEMA, (ii) die Folie umfasst eine zähelastische und/oder thermoplastische Folie, wie PVC-Folie, die transparent oder opak und optional eingefärbt sein kann und (iii) die mindestens eine weitere Zahnschicht umfasst PMMA, PEMA, Verblendkomposit, insbesondere lichthärtendes Verblendkomposit, oder eine Verblendkeramik. Die zähelastische und/oder thermoplastische Folie ist erfindungsgemäß eine Folie aus einem organischen polymeren Material.

Ebenso Gegenstand der Erfindung ist eine Prothese ausgewählt aus einem Zahn mit einer integrierten Folie, wobei der Zahn mindestens drei Bereiche umfasst (i) inneren Zahnbereich, insbesondere umfassend mehrere Zahnschichten, (ii) Folienschicht und (iii) mindestens eine weitere Zahnschicht. Ebenso Gegenstand der Erfindung ist eine Brücke umfassend mindestens zwei Zähne, wobei die Zähne jeweils einen inneren Zahnbereich aufweisen, der zumindest teilweise mit einer Folienschicht versehen ist und die Folienschicht zumindest teilweise von einer weiteren Zahnschicht, wie einer Verblendung, abgedeckt ist.

Entsprechend einer Ausführungsform der dentalen Prothese der Erfindung kann der (i) innere Zahnbereich dem Bereich des Dentins und die (iii) mindestens eine weitere Zahnschicht dem Bereich des Zahnschmelzes entsprechen. Die Folienschicht befindet sich in dieser Ausführungsvariante vorzugsweise zwischen dem Dentinbereich und dem Bereich des Zahnschmelzes.

Dabei kann der (i) innere Zahnbereich vorzugsweise mehrere Zahnschichten aufweisen. Der innere Zahnbereich entspricht im vorkonfektionierten Zahn dem Zahnkern, der analog dem Zahnschmelz entspricht. Der Zahnkern weist vorzugsweise basal ein Lumen zur Befestigung der Prothese im Mund des Patienten auf. Die (iii) mindestens eine weitere Zahnschicht kann eine Zahnschicht (1-Zahnschicht) bis eine Vielzahl an Zahnschichten (n-Zahnschichten) aufweisen, wie eine weitere Zahnschicht, eine zweite weitere Zahnschicht, etc. wobei eine der weiteren Zahnschichten der äußere Zahnschicht entspricht. Die Verblendung kann umfassen eine äußere Zahnschicht oder eine weitere Zahnschicht, eine Folie sowie eine äußere, weitere Zahnschicht. Die Verblendung kann der Dentinschicht im natürlichen Zahn entsprechen.

Ferner kann die Prothese umfassen, (i) einen inneren Zahnbereich, insbesondere monolithisch oder schichtweise aufgebaut, umfassend mindestens ein Polymer eines Acrylats, wie Alkylacrylat, insbesondere PMMA, vorzugsweise Copolymere von Acrylaten und/oder (ii) die mindestens eine Folienschicht umfassend eine zähelastische und/oder thermoplastische Folie, wobei die Folie auf den folgenden Materialien basieren kann PVC, Acrylat basierte Folie, PE, PP, LDPE, HDPE, LDPP; HDPP, PUR, Polycarbonat und/oder (iii) die mindestens eine weitere Zahnschicht umfasst ein Polymer eines Acrylates, wie Alkylacrylat, insbesondere PMMA, Copolymere von Acrylaten, Verblendkomposit, dentale Verblendkeramik, wie Zirkondioxid.

Die Folienschicht kann vorzugsweise eine Schichtdicke von 50 bis 1000 µm (Mikrometer) aufweisen, bevorzugt sind 50 bis 250 µm, weiter bevorzugt sind 50 bis 170 µm.

Der innere Zahnbereich umfasst vorzugsweise Acrylate oder Methacrylate, optional mit organischen und/oder anorganischen Füllstoffen. Übliche Füllstoffe umfassen Siliciumdioxid, Zirkondioxid, dentale Gläser.

Im Rahmen der schichtweisen Herstellung von künstlichen Zähnen kann eine Folienschicht in einen Zahn integriert werden, optional kann mindestens eine weitere Folienschicht eingebracht und in den Zahn integriert werden. Die Schicht kann an beliebiger Stelle im Zahn, optional zusätzlich an der Oberfläche aufgebracht werden.

Folgende Kriterien gelten für geeignete Folienmaterialien. Die Folie sollte vorzugsweise zähelastisch, anbindbar an PMMA sein. Entweder über Lösungsvorgänge oder über eine chemische Anbindung, wie chemische Reaktionen oder ggf. durch Oberflächenbehandlungen, wie Plasmabeschichtungen. Optional können Folienschichten eingefärbt, wie Zahnfarben eingefärbt und/oder opak eingesetzt werden. Im Versuch wurde eine modifizierte PVC-Folie mit 140 µm Stärke und einem Schmelzbereich zwischen 120 und 170°C verwendet. Möglich sind jedoch auch andere Folienmaterialien, die sich homogen mit dem umgebenden Zahnmaterial verbinden.

Durch die Modifikation der prothetischen Versorgung wurden weder die ästhetischen Eigenschaften beeinflusst, noch die Festigkeit des Zahnes verringert. Das Produkt erfüllt die materialtechnischen Anforderungen der EN ISO 22112.

Ebenso Gegenstand der Erfindung ist eine dentale Prothese, wobei (ii) die Folienschicht eine transparente, milchige oder opake Folie umfasst, die optional zudem eingefärbt sein kann. Vorzugweise kann die Folie eingefärbt sein, insbesondere weist die Folie einen Gelbton auf.

Ferner kann die dentale Prothese eine Folie umfassen, die plasmabehandelt oder oberflächlich chemisch modifiziert ist. Vorzugsweise kann die Folie chemisch an den inneren Zahnbereich und/oder an den weiteren Zahnbereich kovalent anbindbar sein. Eine Anbindung kann vorzugweise mittels einer oberflächlich modifizierten Folie erfolgen, die mittels thermischer Aktivierung kovalent an den inneren Zahnbereich und/oder den weiteren Zahnbereich bindet.

Ebenso Gegenstand der Erfindung ist ein Verfahren zur Herstellung einer dentalen Prothese, sowie eine dentale Prothese erhältlich nach dem Verfahren, umfassend die Schritte
1) Bereitstellen einer Folie und 2) integrieren der Folie in die Prothese, vorzugsweise wird die Folie in die Prothese integriert, indem
   a) (i) in einem ersten Schritt ein innerer Zahnbereich hergestellt wird, (ii) in einem nachfolgenden Schritt zumindest teilweise auf den inneren Zahnbereich eine Folie aufgebracht und fixiert wird oder an den inneren Zahnbereich eine Folie angeordnet wird, und optional (iii) auf die Folie und optional auf die nicht mit Folie versehenen Bereiche des inneren Zahnbereiches zumindest teilweise mindestens eine weitere Zahnschicht aufgebracht wird oder
   b) (i) Vorlegen mindestens einer weiteren Zahnschicht, (ii) Anordnen, insbesondere Aufbringen, einer Folie an der weiteren Zahnschicht, (iii) Anordnen eines inneren Zahnbereichs an der Folie, oder
   c) (i) Vorlegen, insbesondere Anordnen, einer Folie und (ii) Umgeben der Folie mit dem inneren Zahnbereich und/oder der mindestens einen weiteren Zahnschicht. Die Folie wird in der Verfahrensvariante c) vorzugweise in ein Negativ einer Prothesenform eingespannt und anschließend mit aushärtbarem bzw. polymerisierbarem Prothesenmaterial umgeben.

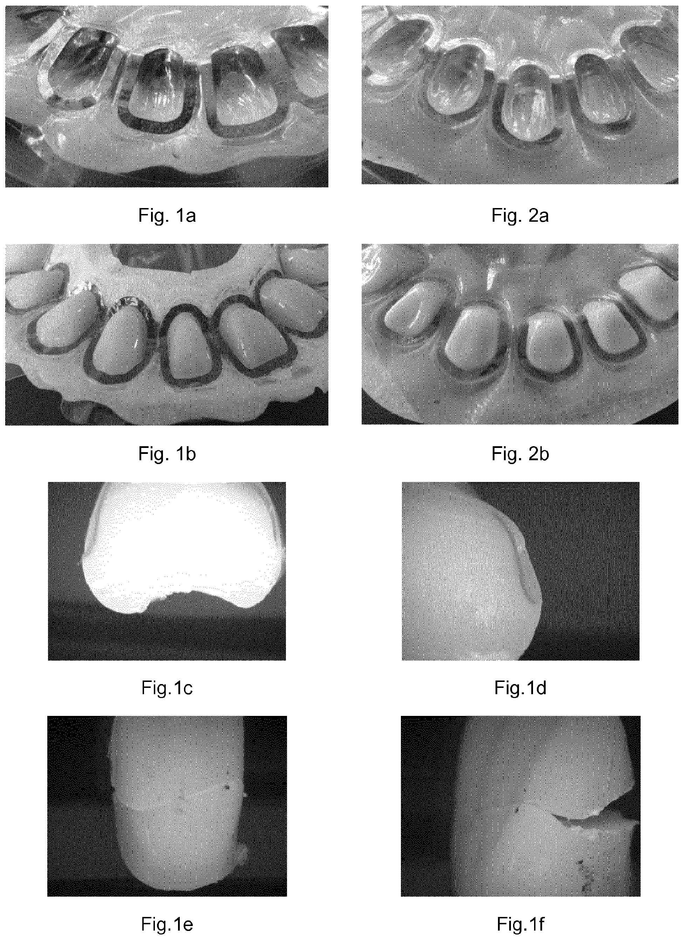

Gemäß der Alternative c) (i) wird die Folie angeordnet, indem die Folie, insbesondere eine Folie aus organischen Polymeren, besonders bevorzugt eine Bahn einer Folie, in eine Hohlform, insbesondere zwischen die Negativformen der Hohlform eingespannt werden kann. Ein besonderer Vorteil des erfindungsgemäßen Verfahrens ist dabei, dass die Folie oder Bahn der Folie bzw. Folienbahn nicht zugeschnitten werden muss, sondern aus der Hohlform herausstehen kann und als ganze Bahn einer Folie bzw. Folienbahn, insbesondere von der Rolle, zwischen den jeweiligen Negativformen einer Vielzahl an Hohlformen vorkonfektionierter Zähne eingespannt werden kann, wie in den Figuren 1a, 1b, 2a und 2b dargestellt. Nach dem erfindungsgemäßen Verfahren braucht die Folie nicht tiefgezogen werden. Daher können nach dem erfindungsgemäßen Verfahren durch Integrieren einer Folie eine Vielzahl an vorkonfektionierten Prothesen, insbesondere vorkonfektionierten Zähne, hergestellt werden.

Nach einer weiteren Alternative umfasst das Verfahren die Schritte: d) (i) im ersten Schritt wird zumindest ein Teil eines inneren Zahnbereichs hergestellt, (ii) in einem nachfolgenden Schritt wird zumindest teilweise auf den inneren Zahnbereich eine Folie aufgebracht und fixiert oder es wird an den inneren Zahnbereich eine Folie angeordnet, und optional (iii) wird auf die Folie und optional die nicht mit Folie versehenen Bereiche des inneren Zahnbereichs zumindest teilweise mindestens eine weitere Teil des inneren Zahnbereiches aufgebracht.

Vorzugsweise kann das Verfahren die folgenden Schritte umfassen in dem (i) ersten Schritt wird ein innerer Zahnbereich hergestellt, (ii) in einem nachfolgenden Schritt wird zumindest teilweise auf den inneren Zahnbereich eine Folie aufgebracht und fixiert oder es wird an den inneren Zahnbereich eine Folie angeordnet, und optional (iii) auf die Folie und die nicht mit Folie versehenen Bereiche des inneren Zahnbereiches wird zumindest teilweise mindestens eine weitere Zahnschicht aufgebracht. Das Aufbringen der Folie kann vorzugsweise thermisch erfolgen.

Die äußerste weitere Zahnschicht entspricht vorzugsweise der Verblendung oder alternativ entspricht die Verblendung folgendem Aufbau: eine weitere Zahnschicht, einer Folienschicht, einer weiteren Zahnschicht, die der äußeren Zahnschicht entspricht.

Nach einer Alternative kann ein erfindungsgemäßer Zahn hergestellt werden, indem in eine Gussform mindestens eine Folie eingespannt wird und nachfolgend die polymerisierbare, dentale Polymermischung unter Druck in die Gussform eingebracht wird.

So kann beispielsweise ein Zahnzement, insbesondere umfassend PMMA, angemischt werden und zur Herstellung des inneren Zahnbereichs in eine Form unter Druck injiziert werden. Der Zahnzement härtet dann aus. Vorzugsweise kann die Folie in der Form so eingespannt sein, dass die Folie in den Zahnzement integriert wird und zugleich der Aufbau: innerer Zahnbereich, Folie und mindestens eine weitere Zahnschicht gebildet wird.

Alternativ kann auf den inneren Zahnbereich eine Folie aufgebracht werden. Dies kann beispielsweise erfolgen, indem eine Folie auf mindestens einen Teil eines inneren Zahnbereiches aufgebracht und optional erhitzt wird.

So kann im erfindungsgemäßen Verfahren zumindest ein Teil (i) des inneren Zahnbereichs hergestellt werden aus einer Zusammensetzung, insbesondere einer polymerisierbaren Zusammensetzung, umfassend 50 bis 90 Gew.-% pulverförmige Polymere, wie PMMA, vorzugsweise 60 bis 70 Gew.-% PMMA, insbesondere PMMA-Perlpolymerisaten, und 10 bis 50 Gew.-% Monomeren, vorzugsweise 30 bis 40 Gew.-% Monomeren, wobei die Monomere insbesondere umfassen (Meth)acrylate, Derivate von (Meth)acrylaten und/oder Vernetzern, wie di- und mehrfach funktionelle (Meth)acrylate. Ein bevorzugter Mehrfachvernetzer ist Glykoldimethacrylat. Die Zusammensetzung ist vorzugsweise ein polymerisierbarer Zahnzement, vorzugsweise eine radikalisch polymerisierbare Zusammensetzung, weiter bevorzugt eine thermisch polymerisierbare Zusammensetzung. Vorzugsweise umfasst die Zusammensetzung Initiatoren für eine thermisch induzierte radikalische Polymerisation. Bevorzugte Initiatoren umfassen Peroxide, wie Dibenzoylperoxid (BPO), oder auch N,N-Azobisisobutyronitril = 2,2'-Azo-di(isobutyronitril) (AIBN).

Alternativ kann der innere Zahnbereich, mindestens eine Zahnschicht oder die Verblendung hergestellt werden oder ist erhältlich durch Auspolymerisieren von 0 bis 50 Gew.-% organischen oder anorganischen Füllstoffen, 50 bis 90 Gew.-% PMMA, 10 bis 50 Gew.-% Monomere, insbesondere umfassend (Meth)acrylate, Derivate von (Meth)acrylaten und/oder Vernetzern, wobei die Gesamtzusammensetzung 100 Gew.-% beträgt. Wobei die organischen und anorganischen Füllstoffe umfassen pulverförmige Polymere, insbesondere mit Ausnahme von PMMA. Die anorganischen Füllstoffe können umfassen dentale Gläser, Glaskeramik, Metalloxide, wie Siliciumdioxid, Zirkondioxid, Ytterbium, Barium und Strontium enthaltende organische Füllstoffe.

Vorzugsweise können die innere Zahnschicht und die weitere Zahnschicht ebenfalls jeweils unabhängig aus der vorgenannten Zusammensetzung hergestellt werden. Dazu wird die Zusammensetzung vorzugsweise in einer Negativform in die Form zumindest eines Teils eines inneren Zahnbereiches oder einer Zahnschicht gebracht und zumindest teilweise polymerisiert, wobei optional eine Trennschicht, wie eine Trennfolie, verwendet wird. Anschließend kann die Trennschicht entfernt und (ii) durch die Folie ersetzt werden. In einem weiteren Schritt (iii) wird weitere polymerisierbare Zusammensetzung in die Negativform eingebracht, um einen weiteren Teil des inneren Zahnbereichs oder einer Zahnschicht zu bilden und zu polymerisieren. Die Polymerisation erfolgt vorzugsweise bei 2 bis 10 bar, bevorzugt bei 3 bis 5 bar, und 90 bis 150 °C, vorzugsweise bei 90 bis 120 °C.

Nach einer Alternative umfasst (ii) die innere Zahnschicht ein Polymer eines Acrylats, wie Alkylacrylate, insbesondere PMMA, vorzugsweise Copolymere von (Alkyl)acrylaten und/oder Monomeren umfassend (Meth)acrylat, und/oder (iii) die mindestens eine weitere Zahnschicht umfasst ein Polymer eines Acrylates, wie (Alkyl)acrylat, insbesondere PMMA, Copolymere von Alkylacrylaten und/oder Monomeren umfassend (Meth)acrylate oder dentales Verblendkomposit, inbesondere ein lichthärtendes Verblendkomposit, dentale Verblendkeramik, Zirkondioxid.

Der innere Zahnbereich, die mindestens eine Zahnschicht oder weiteren Zahnschichten und/oder die Verblendung umfassen vorzugsweise folgende Polymere, Co-Polymere optional umfassend Vernetzer oder basieren auf den Polymerisationsprodukten folgender Monomere und vorzugsweise folgender pulverförmiger Polymere, wie (Alkyl)acrylaten, wie PMMA, PEMA, und/oder ein Copolymeren basierend auf (Meth)acrylaten und Vernetzern, wie UDMA, Bis-GMA, EGDMA. Alternativ können zusätzlich anorganische Füllstoffe enthalten sein.

Der innere Zahnbereich oder die Zahnschichten werden vorzugsweise hergestellt aus einer polymerisierbaren Zusammensetzung umfassend 50 bis 90 Gew.-% pulverförmiges Polymer, wie PMMA, und 10 bis 50 Gew.-% Monomere, insbesondere umfassend (Meth)acrylate, Derivate von (Meth)acrylaten.

Als Monomer, kommen vorzugsweise in Betracht mindestens ein Monomer oder eine Mischung von Monomeren umfasst von a) Methylmethacrylat, Ethylmethacrylat, Propylmethacrylat, Butylmethacrylat, n-Hexylmethacrylat, 2-Phenoxyethylmethacrylat, Isobornylmethacrylat, Isodecylmethacrylat, Polypropylen-glykol-mono-methacrylat, Tetrahydrofuryl-methacrylat, Polypropylen-glykol-mono-methacrylat, Methylacrylat, Ethylacrylat, Propylacrylat, Butylacrylat, n-Hexylacrylat, 2-Phenoxyethylacrylat, Isobornylacrylat, Isodecylacrylat, Polypropylen-glykol-mono-acrylat, Tetrahydrofuryl-acrylat, Polypropylen-glykol-mono-acrylat, Hydroxyethylacrylat, Hydroxypropylacrylat, Hydroxyethylmethacrylat, Hydroxypropylmethacrylat, Benzyl-, Furfuryl- oder Phenyl(meth)acrylat eine Mischung enthaltend mindestens eines dieser (Meth-)acrylate und/oder Co-Polymere umfassend eines oder mindestens zwei der vorgenannten Monomere, und/oder b) zwei- und/oder Mehrfachvernetzer umfassend 1,4-Butandiol-dimethacrylat (1,4-BDMA) oder Pentaerythritol-tetraacrylat, Bis-GMA-Monomer (Bisphenyl-A-Glycidyl-Methacrylat), Triethylenglycoldimethacrylat (TEGDMA) und Diethylenglycoldimethacrylat (DEGMA), Tetraethylenglykoldi(meth)acrylat, Decandioldi(meth)acrylat, Dodecandioldi(meth)acrylat, Hexyldecandioldi(meth)acrylat, Trimethylolpropantri(meth)acrylat, Pentaerythrittetra(meth)-acrylat sowie Butandioldi(meth)acrylat, Ethylenglycol-di(meth)acrylat, Polyethylenglycol-di(meth)acrylate, ethoxylierte/propoxylierte Bisphenol-A-di(meth)acrylate eine Mischung enthaltend mindestens eines dieser (Meth-)acrylate und/oder Co-Polymere umfassend eines oder mindestens zwei der vorgenannten Monomere.

Als Polymere, insbesondere als pulverförmige Polymere, insbesondere als Perlpolymerisat, kommen vorzugsweise in Betracht polymere Partikel umfassend Polymere in Form von Polymerpulver umfassend Polyalkyl(meth)acrylate, die optional vernetzt sind und als Homo- oder Co-Polymere vorliegen, wobei die Polymere auf mindestens einem der Monomere, umfassend eine (Meth-)acrylat-Gruppe, basieren, ausgewählt aus Methylmethacrylat, Ethylmethacrylat, Propylmethacrylat, Butylmethacrylat, n-Hexylmethacrylat, 2-Phenoxyethylmethacrylat, Isobornylmethacrylat, Isodecylmethacrylat, Polypropylen-glykol-mono-methacrylat, Tetrahydrofuryl-methacrylat, Polypropylen-glykol-mono-methacrylat, Methylacrylat, Ethylacrylat, Propylacrylat, Butylacrylat, n-Hexylacrylat, 2-Phenoxyethylacrylat, Isobornylacrylat, Isodecylacrylat, Polypropylen-glykol-mono-acrylat, Tetrahydrofuryl-acrylat, Polypropylenglykol-mono-acrylat, Hydroxyethylacrylat, Hydroxypropylacrylat, Hydroxyethylmethacrylat, Hydroxypropylmethacrylat, eine Mischung enthaltend mindestens eines dieser (Meth-)acrylate und/oder Co-Polymere umfassend eines oder mindestens zwei der vorgenannten Monomere, Polyamidpartikel, Polyamidfasern, besonders bevorzugt ist Polymethylmethacrylat (PMMA). Darüber hinaus können die polymeren Partikel auch Gemische dentaler Monomeren wie z.B. MMA und zusätzlich mindestens einen Vernetzer umfassen.

Besonders bevorzugt sind pulverförmige Komponenten B) umfassend Polymethylmethacrylat (PMMA) Perlen als polymere Partikel und/oder Splitterpolymerisate sowie Co-Polymere umfassend als einpolymerisierte Comonomere Styrol, alpha-Methylstyrol, Vinyltoluol, substituierte Vinyltoluole wie Vinylbenzylchloride, Vinylhalogenide wie Vinylchlorid, Vinylester, wie Vinylacetat, heterocyclische Vinylverbindungen wie 2-Vinylpyridin, Vinylacetat und Vinylpropionat, Butadien, Isobutylen, 2-Chlorbutadien, 2-Methylbutadien, Vinylpyridin, Cyclopenten, (Meth)acrylsäureester, wie Methylmethacrylat, Butylmethacrylat, Butylacrylat und Hydroxyethylmethacrylat, ferner Acrylnitril, Maleinsäure und Maleinsäurederivate, wie beispielsweise Maleinsäureanhydrid, Fumarsäure und Fumarsäurederivate, wie Fumarsäureester, Acrylsäure, Methacrylsäure, Aryl(meth)acrylate, wie Benzylmethacrylat oder Phenylmethacrylat sowie optional Mischungen dieser Comonomere.

Ferner umfasst die Erfindung vorzugsweise einen inneren Zahnbereich, die mindestens eine Zahnschicht und die mindestens eine weitere Zahnschicht ein Prothesenmaterial erhältlich aus der Umsetzung von vorzugsweise Monomere und pulverförmigen Polymere in Gegenwart mindestens eines Initiators oder Initiatorsystems für die Autopolymerisation, die Strahlenhärtung, insbesondere UV-Härtung, Heisspolymerisation oder Dualhärtung.

Nach einer besonders bevorzugten Verfahrensalternative wird eine PVC-Folie, insbesondere mit einer Schichtdicke von 50 bis 170 µm, bevorzugt um 140 µm, auf einen inneren Zahnbereich aufgebracht und bis zum Schmelzbereich erhitzt. Bevorzugt eingesetzte Folien weisen einen Schmelzbereich zwischen 120 °C bis 170 °C auf. Generell sollte der Schmelzbereich des Materials der Folie unterhalb des Schmelzbereiches des Materials des inneren Zahnbereiches und/oder der mindestens eine weiteren Zahnschicht liegen, wenn die Folie separat durch ein thermisches Verfahren aufgebracht wird. Wird die Folie in eine Form eingespannt und der noch zu polymerisierende Zahnzement eingefüllt, sollte die Schmelztemperatur der Folie oberhalb der Polymerisationstemperatur liegen. Gegenstand der Erfindung ist somit auch ein Verfahren, in dem die Folie einen Schmelzbereich von 120 bis 170 °C aufweist und die Folie mit einer polymerisierbaren Zusammensetzung, insbesondere zur Heiss-, Kalt- oder Autopolymerisation, zur Herstellung des inneren Zahnbereichs einer Prothese umgeben wird oder diese Zusammensetzung auf die Folie aufgebracht wird. Nachfolgend kann die Zusammensetzung aufgrund des gewählten Schmelzbereiches der Folie heißpolymerisiert werden.

Alternativ kann die Folie in einem Aufziehverfahren auf einen Teil einer Prothese aufgebracht, insbesondere aufgezogen oder aufgeschrumpft werden, um nachfolgend mindestens eine weitere Zahnschicht auf die Folien aufzubringen.
Nach dem erfindungsgemäßen Verfahren wird die Folie zumindest teilweise in die dentale Prothese integriert.
Die Materialien der Folien, des inneren Zahnbereiches und der mindestens einen weiteren Zahnschicht können aus den vorstehend beschriebenen Materialien gebildet werden. Ferner ist Gegenstand der Erfindung ein Verfahren, in dem eine dentale Prothese mit einer integrierten Folie hergestellt wird, dabei wird ein Zahn umfassend einen inneren
Zahnbereich, der zumindest teilweise mit einer Folienschicht versehen ist hergestellt, wobei die Folienschicht zumindest teilweise von mindestens einer weiteren Zahnschicht, insbesondere einer Verblendung, abgedeckt ist.

Ebenso Gegenstand der Offenbarung ist die Verwendung einer Folie zur Herstellung von Prothesen mit integrierter Folie. Nach einer weiteren Alternative ist Gegenstand der Offenbarung die Verwendung von Folien, insbesondere von zähelastischen und/oder thermoplastischen oder plastischen Folien zur Herstellung von vorkonfektionierten Zähnen, Kronen, Verblendschalen oder Brücken mit integrierter Folie. Ferner ist es bevorzugt, wenn die Folien opak und/oder eingefärbt sind. Vorzugsweise weisen die Folien einen Gelbton auf. Unter zähelastischen Folien werden Folien verstanden, die unter Krafteinwirkung Ihre Ausdehnung verändern können und bei Wegfall der einwirkenden Kraft zumindest teilweise in die Ursprungsform zurückzukehren. Zähelastische Folien können vorzugsweise aus PVC, Polyacrylaten, PE, PP, Polystyrol, Polybutadien enthaltenen Materialien etc. hergestellt werden. Vorzugsweise können die zähelastischen Folien aus Elastomeren hergestellt sein. Elastomere umfassen Naturkautschuk, Polybutadien enthaltende Polymere, Polystyrol enthaltende Polymere sowie auch Silikonkautschuk. Unter plastisch verformbaren Folien werden Folien verstanden, die sich nach einer Krafteinwirkung und Überschreiten einer Fließgrenze irreversibel verformen.

Ebenso Gegenstand der Offenbarung ist eine oder eine Vielzahl an Prothesen erhältlich nach einem Verfahren, insbesondere kann durch Integration einer Folie eine Vielzahl an vorkonfektionierten Zähnen hergestellt werden.

Die nachfolgenden Beispiele erläutern die Erfindung, ohne sie auf diese Ausführungsbeispiele zu beschränken. Die Erfindung wird auch anhand der nachfolgenden Figuren näher erläutert.
- Figur 1a:: Teilfertiger Zahn mit integrierter Folie
- Figur 1b:: Fertiger Zahn mit integrierter Folie, keine Beeinflussung der optischen Eigenschaften
- Figur 1c, 1d:: Schnittbild Zahn mit sichtbarer transparenter Folie
- Figur 1e:: Frakturierter Zahn Frontansicht
- Figur 1f:: Frakturierter Zahn Seitenansicht
- Figur 1g:: Frakturierter Zahn - Bruchstück hängt am Stumpf über Folienmaterial
- Figur 1h:: Frakturierter Zahn - Bruchstück hängt am Stumpf über Folienmaterial
- Figur 2a:: Teilfertiger Zahn mit integrierter farbiger Folie
- Figur 2b:: Fertiger Zahn mit integrierter farbiger Folie
- Figur 3:: Schematische Ansicht eines Schnittbildes eines vorkonfektionierten Zahnes 0 umfassend eine Schneideschale 1 in Form einer weiteren Zahnschicht, eine Folienschicht 2 und einen inneren Zahnbereich 3.

### Beispiele

Im Rahmen der schichtweisen Herstellung von künstlichen Zähnen wurde eine Folienschicht in eine Negativform von Zahnprothesen eingebracht und in den Zahn integriert. Es wurde eine modifizierte PVC-Folie mit 140 µm Stärke und einem Schmelzbereich zwischen 120 und 170°C verwendet, möglich sind jedoch auch andere Folienmaterialien, die sich homogen mit dem umgebenden Zahnmaterial verbinden.

Im ersten Schritt der Herstellung wird eine auf einer PMMA und Methacrylatmischung basierende Paste in die Produktionsform eingebracht. Ein einfaches Beispiel einer geeigneten Teigmasse ist eine Mischung aus 60-70% PMMA-Perlpolymeren und 30-40% methacrylatbasierenden Monomeren und Vernetzern (z.B. Methylmethacrylat und Glykoldimethacrylat). Diese Mischung wird vor Verwendung durch Quellvorgänge in eine geeignete viskoelastische Konsistenz gebracht.
Nach Auflegen einer zusätzlichen Trennfolie und Aufsetzen des Formoberteils wird die erste Schicht bei 90°C - 120°C vorpolymerisiert. Die Vorpolymerisation erfolgt in einer hydraulischen Heizpresse radikalisch durch Initiierung mit Peroxid.
Nach Entfernen der Trennfolie wird die einzubindende Spezialfolie auf die vorpolymerisierte Schicht aufgelegt und die Folgeschicht ebenfalls in Form einer Paste entweder aufgelegt oder über ggf. vorhandene Injektionskanäle in die bereits geschlossene Form injiziert. Wichtig ist dabei, in der Form ausreichend Druck aufzubauen und dem pastösen Material im Rahmen der Aufheizphase der Form etwas Einwirkzeit auf die Folie zu lassen. Hier genügen etwa 3-5 Minuten bis zum Erreichen der Soll-Polymerisationstemperatur. Nach Aushärten der in der Form befindlichen Masse kann die Form geöffnet werden. Die Folie ist fest zwischen den 2 Materialschichten eingebunden.

In gleicher Weise können ggf. weitere Schichten hinzugefügt werden. Nach Abschluss der Herstellung der letzten Schicht des Zahnes werden die Zähne aus dem umgebenden Kunststoff herausgelöst.
Die am Zahn aufgrund der Formtrennkanten verbleibenden Pressgrate werden im Anschluss entweder mittels automatischer Entgratung oder manueller Entgratung mit Handschleifgeräten entfernt. Eine automatische Entgratung erfolgt bevorzugt durch Laser, kann aber auch mit jedem üblichen Gleitschleif- oder Trommelentgratungsverfahren vorgenommen werden.

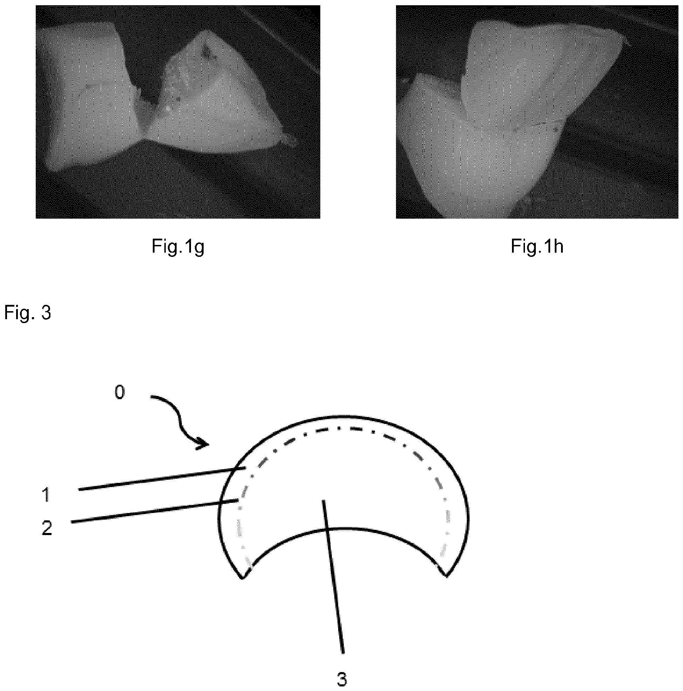

Die visuelle Analyse der Schnittbilder in den Figuren 1c und 1d zeigt deutlich den Verlauf der Folienschicht zwischen der ersten Zahnschicht (Schneideschale) und der 2. Zahnschicht (Dentin). Bei gewaltsamen Brechen des Zahnes bleibt das Bruchstück flexibel mit dem Restzahn verbunden, wie in den Figuren 1g und 1h zu erkennen ist.

Das Bruchstück kann erst durch weiteres Auseinanderziehen der Teile und Zerreißen der Folie abgetrennt werden.

Durch die Modifikation der Zähne mit den erfindungsgemäßen Folien wurden weder die ästhetischen Eigenschaften beeinflusst, noch die Festigkeit des Zahnes verringert. Das Produkt erfüllt die materialtechnischen Anforderungen der EN ISO 22112.

Figur 3 zeigt eine schematische Darstellung eines vorkonfektionierten, erfindungsgemäßen Zahns, der nach einem erfindungsgemäßen Verfahren hergestellt wurde. Unter der Schicht der Schneideschale 1, die einer weiteren Zahnschicht entspricht, ist die Folienschicht 2 integriert. Die Folienschicht 2 ist auf dem inneren Zahnbereich 3 aufgebracht.

## Patentansprüche

1. Dentale Prothese, wobei in der dentalen Prothese mindestens eine Schicht einer Folie integriert ist, wobei die Prothese schichtweise aufgebaut ist und mindestens ein Teil der Prothese mindestens eine innenliegende Schicht einer Folie umfasst, wobei die dentale Prothese ein Zahn mit mindestens einer integrierten Folie ist, wobei der Zahn mindestens drei Bereiche umfasst
(i) inneren Zahnbereich (3), wobei der innere Zahnbereich (3) mindestens ein Polymer eines (Alkyl)acrylats, und/oder Copolymers basierend auf (Meth)acrylaten und Vernetzern umfasst,
(ii) Folienschicht (2) und
(iii) mindestens eine weitere Zahnschicht (1), wobei die Folienschicht (2) zumindest teilweise zwischen dem inneren Zahnbereich (3) und der mindestens einen weiteren Zahnschicht (1) angebracht ist, wobei die mindestens eine weitere Zahnschicht (1) mindestens ein Polymer eines (Alkyl)acrylates, Copolymers Verblendkomposit und/oder dentale Verblendkeramik, wie Zirkondioxid umfasst,
**dadurch gekennzeichnet, dass**
die Folienschicht (2) eine zähelastische und thermoplastische Folie umfasst.

2. Prothese nach Anspruch 1, **dadurch gekennzeichnet, dass** die Prothese mindestens ein Teil eines Zahnersatzes ist, insbesondere ein einzelner Zahn, Verblendschale, Krone, eine Brücke, insbesondere eine mehrgliedrige Brücke.

3. Prothese nach Anspruch 1, **dadurch gekennzeichnet, dass**
(i) der innere Zahnbereich (3) mindestens ein Polymer eines (Alylk)acrylats, wie PMMA, PEMA, und/oder Copolymers basierend auf (Meth)acrylaten und Vernetzern, umfassend UDMA, Bis-GMA, EGDMA, umfasst.

4. Prothese nach einem der Ansprüche 1 bis 3, **dadurch gekennzeichnet, dass** die dentale Verblendkeramik Zirkondioxid umfasst.

5. Prothese nach einem der Ansprüche 1 bis 4, **dadurch gekennzeichnet, dass** (ii) die Folienschicht (2) umfasst eine Folie umfassend PVC, Acrylat, PE, PP, LDPE, HDPE, LDPP, HDPP, PUR, Polycarbonat und/oder eine Mischung umfassend eines dieser Polymere.

6. Prothese nach einem der Ansprüche 1 bis 5, **dadurch gekennzeichnet, dass** die Folie eingefärbt ist, insbesondere weist die Folie einen Gelbton auf.

7. Prothese nach einem der Ansprüche 1 bis 6, **dadurch gekennzeichnet, dass** die Folie plasmabehandelt oder oberflächlich chemisch modifiziert ist.

8. Verfahren zur Herstellung einer dentalen Prothese nach einem der Ansprüche 1 bis 7, **dadurch gekennzeichnet, dass** es die Schritte umfasst
1) Bereitstellen einer Folie
2) integrieren der Folie in die Prothese, indem
a)
(i) in einem ersten Schritt ein innerer Zahnbereich (3) hergestellt wird,
(ii) in einem nachfolgenden Schritt zumindest teilweise auf den inneren Zahnbereich (3) eine Folie aufgebracht und fixiert wird oder an den inneren Zahnbereich (3) eine Folie angeordnet wird, und
(iii) auf die Folie und optional auf die nicht mit Folie versehenen Bereiche des inneren Zahnbereiches (3) zumindest teilweise mindestens eine weitere Zahnschicht (1) aufgebracht wird oder
b) (i) Vorlegen mindestens einer weiteren Zahnschicht (1), (ii) Aufbringen einer Folie an der weiteren Zahnschicht (1), (iii) Anordnen eines inneren Zahnbereichs (3) an der Folie, oder
c) (i) Anordnen einer Folie und (ii) Umgeben der Folie mit dem inneren Zahnbereich (3) und der mindestens einen weiteren Zahnschicht (1) oder
d) (i) in einem ersten Schritt zumindest ein Teil eines inneren Zahnbereichs (3) hergestellt wird, (ii) in einem nachfolgenden Schritt zumindest teilweise auf den inneren Zahnbereich (3) eine Folie aufgebracht und fixiert wird oder an den inneren Zahnbereich (3) eine Folie angeordnet wird, und (iii) auf die Folie und optional die nicht mit Folie versehenen Bereiche des inneren Zahnbereichs (3) zumindest teilweise mindestens ein weiterer Teil des inneren Zahnbereiches (3) aufgebracht wird, wobei
(i) der innere Zahnbereich (3) hergestellt wird aus einer polymerisierbaren Zusammensetzung umfassend a) 50 bis 90 Gew.-% pulverförmigem Polymer, wie PMMA, und 10 bis 50 Gew.-% Monomere, oder
b) 0 bis 50 Gew.-% organische oder anorganische Füllstoffe,
50 bis 90 Gew.-% PMMA,
10 bis 50 Gew.-% Monomere, wobei die Gesamtzusammensetzung jeweils 100 Gew.-% beträgt, und
(ii) der innere Zahnbereich (3) umfasst ein Polymer eines Acrylats, wie (Alkyl)acrylate, insbesondere PMMA, vorzugsweise Copolymere von (Alkyl)acrylaten und/oder Monomeren umfassend (Meth)acrylat, und
(iii) die mindestens eine weitere Zahnschicht (1) umfasst ein Polymer eines Acrylates, wie Alkylacrylat, insbesondere PMMA, Copolymere von (Alkyl)acrylaten und/oder Monomeren umfassend (Meth)acrylate oder dentale Verblendkomposit, Verblendkeramik, Zirkondioxid und
wobei die Folie eine zähelastische und thermoplastische Folie umfasst, und wobei die Folienschicht (2) zumindest teilweise zwischen dem inneren Zahnbereich (3) und der mindestens einen weiteren Zahnschicht (1) angebracht ist.

9. Verfahren nach Anspruch 8, **dadurch gekennzeichnet, dass** die Folie zumindest teilweise in die dentale Prothese integriert wird.

10. Verfahren nach Anspruch 8 oder 9, **dadurch gekennzeichnet, dass** in dem Verfahren eine dentale Prothese mit einer integrierten Folie hergestellt wird, insbesondere ein Zahn umfassend einen inneren Zahnbereich (3), der zumindest teilweise mit einer Folienschicht (2) versehen ist und die Folienschicht (2) zumindest teilweise von einer weiteren Zahnschicht (1) abgedeckt ist, bevorzugt wird durch die Integration einer Folie eine Vielzahl an Prothesen, insbesondere vorkonfektionierten Zähnen, hergestellt.

11. Verfahren nach einem der Ansprüche 8 bis 10, **dadurch gekennzeichnet, dass** in c) (i) das Anordnen der Folie erfolgt, indem die Folie, insbesondere als Bahn einer Folie, zwischen den jeweiligen Negativformen einer oder mehrerer Hohlformen von vorkonfektionierten Zähne eingespannt wird und (ii) Umgeben der Folie mit dem inneren Zahnbereich (3) und/oder der mindestens einen weiterer Zahnschicht (1).

## Claims

1. Dental prosthesis, at least one layer of a film being integrated into the dental prosthesis, the prosthesis being built up layer-wise and at least one part of the prosthesis comprising at least one inside layer of a film, the dental prosthesis being a tooth having at least one integrated film, the tooth comprising at least three portions
(i) inner tooth portion (3), the inner tooth portion (3) comprising at least one polymer of an (alkyl) acrylate, and/or of a copolymer based on (meth)acrylates and cross-linkers,
(ii) film layer (2), and
(iii) at least one further tooth layer (1), the film layer (2) being attached, at least in part, between the inner tooth portion (3) and the at least one further tooth layer (1), the at least one further tooth layer (1) comprising at least one polymer of an (alkyl) acrylate, of a copolymer, veneering composite and/or dental veneering ceramic, such as zinc oxide,
**characterised in that** the film layer (2) comprises a tough-elastic and thermoplastic film.

2. Prosthesis according to claim 1, **characterised in that** the prosthesis is at least a part of a dental restoration, in particular a single tooth, veneer, crown, a bridge, in particular a multi-unit bridge.

3. Prosthesis according to claim 1, **characterised in that**
(i) the inner tooth portion (3) comprises at least one polymer of an (alkyl) acrylate, such as PMMA, PEMA, and/or of a copolymer based on (meth)acrylates and cross-linkers, comprising UDMA, Bis-GMA, EGDMA.

4. Prosthesis according to any one of the claims 1 to 3, **characterised in that** the dental veneering ceramic comprises zirconium dioxide.

5. Prosthesis according to any one of the claims 1 to 4, **characterised in that** (ii) the film layer (2) comprises a film comprising PVC, acrylate, PE, PP, LDPE, HDPE, LDPP, HDPP, PUR, polycarbonate and/or a mixture comprising one of said polymers.

6. Prosthesis according to any one of the claims 1 to 5, **characterised in that** the film is dyed, in particular the film has a yellow hue.

7. Prosthesis according to any one of the claims 1 to 6, **characterised in that** the film is plasma-treated or superficially chemically-modified.

8. Method for the production of a dental prosthesis according to any one of the claims 1 to 7, **characterised in** comprising the steps
1) providing a film
2) integrating the film into the prosthesis, by
a)
(i) in a first step, producing an inner tooth portion (3),
(ii) in a subsequent step, applying and fixing, at least in part, a film onto the inner tooth portion (3) or arranging a film at the inner tooth portion (3), and
(iii) applying, at least in part, at least one further tooth layer (1) onto the film and optionally onto the regions of the inner tooth portion (3) not provided with the film, or
b) (i) providing at least one further tooth layer (1), (ii) applying a film to the further tooth layer (1), (iii) arranging an inner tooth portion (3) at the film, or
c) (i) arranging a film, and (ii) surrounding the film with the inner tooth portion (3) and the at least one further tooth layer (1), or
d) (i) in a first step, producing at least a part of an inner tooth portion (3), (ii) in a subsequent step, applying and fixing, at least in part, a film onto the inner tooth portion (3) or arranging a film at the inner tooth portion (3), and (iii) applying, at least in part, at least one further part of the inner tooth portion (3) onto the film and optionally the regions of the inner tooth portion (3) not provided with the film,
(i) the inner tooth portion (3) being produced from a polymerisable composition comprising a) 50 to 90 % by weight powdered polymer, such as PMMA, and 10 to 50 % by weight monomers, or
b) 0 to 50 % by weight organic or inorganic fillers,
50 to 90 % by weight PMMA,
10 to 50 % by weight monomers, the total composition respectively amounting to 100 % by weight, and
(ii) the inner tooth portion (3) comprising a polymer of an acrylate, such as (alkyl) acrylates, in particular PMMA, preferably copolymers of (alkyl) acrylates, and/or of monomers comprising (meth)acrylate, and
(iii) the at least one further tooth layer (1) comprising a polymer of an acrylate, such as alkyl acrylate, in particular PMMA, copolymers of (alkyl)acrylates, and/or of monomers comprising (meth)acrylates, or a dental veneering composite, veneering ceramic, zirconium dioxide, and
the film comprising a tough-elastic and thermoplastic film, and the film layer (2) being attached, at least in part, between the inner tooth portion (3) and the at least one further tooth layer (1).

9. Method according to claim 8, **characterised in that** the film is integrated, at least in part, into the dental prosthesis.

10. Method according to claim 8 or 9, **characterised in that** a dental prosthesis having an integrated film is produced in the method, in particular a tooth comprising an inner tooth portion (3) being provided, at least in part, with a film layer (2), and the film layer (2) is covered, at least in part, by a further tooth layer (1), preferably a multitude of prostheses, in particular of pre-fabricated teeth, is produced by integration of a film.

11. Method according to any one of the claims 8 to 10, **characterised in that** in c) (i) arranging the film is carried out by clamping the film, in particular as web of a film, between the respective negative moulds of one or more hollow moulds of pre-fabricated teeth, and (ii) surrounding the film with the inner tooth portion (3) and/or the at least one further tooth layer (1).

## Revendications

1. Prothèse dentaire, au moins une couche d'un film étant intégrée dans la prothèse dentaire, la prothèse étant construite par couches et au moins une partie de la prothèse comprenant au moins une couche interne d'un film, la prothèse dentaire étant une dent ayant au moins un film intégré, la dent comprenant au moins trois sections
(i) section de dent intérieure (3), la section de dent intérieure (3) comprenant au moins un polymère d'un acrylate (d'alkyle), et/ou d'un copolymère basé sur des (méth)acrylates et des agents de réticulation,
(ii) couche de film (2), et
(iii) au moins une autre couche de dent (1), la couche de film (2) étant attachée, au moins en partie, entre la section de dent intérieure (3) et l'au moins une autre couche de dent (1), l'au moins une autre couche de dent (1) comprenant au moins un polymère d'un acrylate (d'alkyle), d'un copolymère, un composite cosmétique et/ou une céramique cosmétique dentaire, tel que d'oxyde de zinc,
**caractérisée en ce que** la couche de film (2) comprend un film viscoélastique et thermoplastique.

2. Prothèse selon la revendication 1, **caractérisée en ce que** la prothèse est au moins une partie d'une restauration dentaire, en particulière une seule dent, une facette, une couronne, un bridge, en particulière un bridge à multiples éléments.

3. Prothèse selon la revendication 1, **caractérisée en ce que**
(i) la section de dent intérieure (3) comprend au moins un polymère d'un acrylate (d'alkyle), tel que du PMMA, du PEMA, et/ou d'un copolymère basé sur des (méth)acrylates et des agents de réticulation, comprenant de l'UDMA, du Bis-GMA, de l'EGDMA.

4. Prothèse selon l'une des revendications 1 à 3, **caractérisé en ce que** la céramique cosmétique dentaire comprend du dioxyde de zirconium.

5. Prothèse selon l'une des revendications 1 à 4, **caractérisée en ce que** (ii) la couche de film (2) comprend un film comprenant du PVC, de l'acrylate, du PE, du PP, du LDPE, du HDPE, du LDPP, du HDPP, du PUR, du polycarbonate et/ou une mixture comprenant une desdits polymères.

6. Prothèse selon l'une des revendications 1 à 5, **caractérisée en ce que** le film est teinté, en particulière le film a une teinte jaune.

7. Prothèse selon l'une des revendications 1 à 6, **caractérisée en ce que** le film est traité au plasma ou modifié chimiquement à la surface.

8. Procédé pour la production d'une prothèse dentaire selon l'une des revendications 1 à 7, caractérisé en comprenant les étapes
1) fournir un film
2) intégrer le film dans la prothèse, par
a)
(i) dans une première étape, produire une section de dent intérieure (3),
(ii) dans une étape suivante, appliquer et fixer, au moins en partie, un film sur la section de dent intérieure (3) ou arranger un film à la section de dent intérieure (3), et
(iii) appliquer, au moins en partie, au moins une autre couche de dent (1) sur le film ou facultativement sur les régions de la section de dent intérieure (3) non fournies avec le film, ou
b) (i) fournir au moins une autre couche de dent (1), (ii) appliquer un film à l'autre couche de dent (1), (iii) arranger une section de dent intérieure (3) au film, ou
c) (i) arranger un film, et (ii) entourer le film avec la section de dent intérieure (3) et l'au moins une autre couche de dent (1), ou
d) (i) dans une première étape, produire au moins une partie d'une section de dent intérieure (3), (ii) dans une étape suivante, appliquer et fixer, au moins en partie, un film sur la section de dent intérieure (3) ou arranger un film à la section de dent intérieure (3), et (iii) appliquer, au moins en partie, au moins une autre partie de la section de dent intérieure (3) sur le film et facultativement les régions de la section de dent intérieure (3) non fournies avec le film,
(i) la section de dent intérieure (3) étant produite d'une composition polymerisable comprenant a) 50 à 90 % en poids du polymère pulvérulent, tel que du PMMA, et 10 à 50 % en poids des monomères, ou
b) 0 à 50 % en poids des charges organiques ou inorganiques,
50 à 90 % en poids du PMMA,
10 à 50 % en poids des monomères, la composition totale respectivement s'élévant à 100 % en poids, et
(ii) la section de dent intérieure (3) comprenant un polymère d'un acrylate, tel que des acrylates (d'alkyle), en particulière du PMMA, de préférence des copolymères des acrylates (d'alkyle), et/ou des monomères comprenant du (méth)acrylate, et
(iii) l'au moins une autre couche de dent (1) comprenant un polymère d'un acrylate, tel que de l'acrylate d'alkyle, en particulière du PMMA, des copolymères des acrylates (d'alkyle), et/ou des monomères comprenant des (méth)acrylates, ou du composite cosmétique dentaire, de la céramique cosmétique, du dioxyde de zirconium, et
le film comprenant un film viscoélastique et thermoplastique, et la couche de film (2) étant attachée, au moins en partie, entre la section de dent intérieure (3) et l'au moins une autre couche de dent (1).

9. Procédé selon la revendication 8, **caractérisé en ce que** le film est intégré, au moins en partie, dans la prothèse dentaire.

10. Procédé selon la revendication 8 ou 9, **caractérisé en ce qu'**une prothèse dentaire ayant un film intégré est produite dans le procédé, en particulière une dent comprenant une section de dent intérieure (3) étant fournie, au moins en partie, avec une couche de film (2), et la couche de film (2) est couverte, au moins en partie, par l'autre couche de dent (1), de préférence une multitude des prothèses, en particulière des dents préfabriquées, est produite par intégration d'un film.

11. Procédé selon l'une des revendications 8 à 10, **caractérisé en ce que** dans c) (i) l'arrangement du film est effectué par serrer le film, en particulière en tant qu'un lé d'un film, entre les moules négatifs respectifs d'un ou des plusieurs moules creux des dents préfabriquées, et (ii) entourer le film avec la section de dent intérieure (3) et/ou l'au moins une autre couche de dent (1).
